# EUROPEAN PATENT APPLICATION

(11) **EP 4 647 764 A1**
(43) Date of publication of application: **12.11.2025**
(21) Application number: 25174644.2
(22) Date of filing: 06.05.2025
(51) Int. Cl.: G01N 29/46

(54) **METHOD FOR INSPECTING A POWERPLANT COMPONENT USING AN INSPECTION SCOPE**

(30) Priority: 06.05.2024 US 202418656146
(71) Applicant: RTX Corporation, Farmington, CT 06032 (US)
(72) Inventor: Hartmann, William L., Chicago, 60657 (US); Coleman, Ronald B., Arlington, 02474 (US)
(74) Representative: Dehns

(57) **Abstract**

A method of inspecting a component (22) is provided that includes: using a transducer to transmit a first signal into a component (22) comprising a solid metallic material; using the transducer (32) to sense the component (22) for a second signal produced as a result of the first signal being transmitted into the component (22), and produce a response signal representative of the second signal; processing the response signal received from the transducer (32), the processing including decomposing the response signal into a phase spectrum and a magnitude spectrum; and using the phase spectrum and the magnitude spectrum to determine a presence or an absence of a defect in the solid metallic material of the component (22).

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY OF THE DISCLOSURE

According to an aspect of the present invention, a method of inspecting a component is provided that includes: using a transducer to transmit a first signal into a component comprising a solid metallic material; using the transducer to sense the component for a second signal produced as a result of the first signal being transmitted into the component, and produce a response signal representative of the second signal; processing the response signal received from the transducer, the processing including decomposing the response signal into a phase spectrum and a magnitude spectrum; and using the phase spectrum and the magnitude spectrum to determine a presence or an absence of a defect in the solid metallic material of the component.

In embodiments of the above, the step of decomposing the response signal into the phase spectrum and the magnitude spectrum may include applying a Fourier transform to the response signal.

In any of the aspects or embodiments described above, the method may include determining a cepstrum value, and using the cepstrum value to determine the presence or absence of the defect in the solid metallic material of the component.

In any of the aspects or embodiments described above, the step of determining the cepstrum value may include applying a discrete cosine transform to the magnitude spectrum.

In any of the aspects or embodiments described above, the response signal may include a range of different frequencies.

In any of the aspects or embodiments described above, the cepstrum value may be a cepstral coefficient that is representative of a relationship of a given frequency across the range of different frequencies within the response signal.

In any of the aspects or embodiments described above, the method may include using a database of stored acceptable signal response data determined from a plurality of control components that are free from defects to determine the presence or absence of the defect in the solid metallic material of the component.

In any of the aspects or embodiments described above, the transducer may include a signal transmitter and a signal receiver, and the signal transmitter may be independent of the signal receiver.

In any of the aspects or embodiments described above, the first signal and the second signal may be in the range of 30-500kHz.

According to another aspect of the present invention, a method of inspecting a component is provided that includes: using a transducer to transmit a first signal into a component comprising a solid metallic material; using the transducer to sense the component for a second signal produced as a result of the first signal being transmitted into the component, and produce a response signal representative of the second signal; processing the response signal received from the transducer, the processing including performing a cepstral analysis on the response signal, the cepstral analysis producing a cepstrum value; and determining a presence or an absence of a defect in the solid metallic material of the component using the cepstrum value.

In the aspect described above, the step of performing the cepstral analysis may include determining a magnitude spectrum and producing the cepstrum value using the magnitude spectrum.

In any of the aspects or embodiments described above, the step of processing the response signal may include decomposing the response signal into a phase spectrum and the magnitude spectrum.

According to another aspect of the present invention, an investigation system for a component comprising a solid metallic material is provided. The system includes a signal transmitter, a signal receiver, and a controller. The controller is in communication with the signal transmitter, the signal receiver, and a non-transitory memory storing instructions. The instructions when executed cause the controller to: control the signal transmitter to transmit a first ultrasonic signal into the component; control the signal receiver to sense the component for a second ultrasonic signal produced by transmitting the first ultrasonic signal, and produce a response signal representative of the second ultrasonic signal; process the response signal received from the signal receiver, the processing including decomposing the response signal into a phase spectrum and a magnitude spectrum; and use the phase spectrum and the magnitude spectrum to determine a presence or an absence of a defect in the solid metallic material of the component.

In the aspect described above, the instructions when executed may cause the controller to decompose the response signal into the phase spectrum and the magnitude spectrum by applying a Fourier transform to the response signal.

In any of the aspects or embodiments described above, the instructions when executed may cause the controller to determine a cepstrum value, and to use the cepstrum value in the determination of the presence or the absence of the defect in the solid metallic material of the component.

In any of the aspects or embodiments described above, the instructions when executed cause the controller to apply a discrete cosine transform to the magnitude spectrum in the determination of the cepstrum value.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a schematic illustration of a system for inspecting a component of a powerplant.
FIG. 2 is a schematic illustrations of a portion of the inspection system with a component for inspection.
FIG. 3 is a flow diagram of a present disclosure method embodiment.

### DETAILED DESCRIPTION

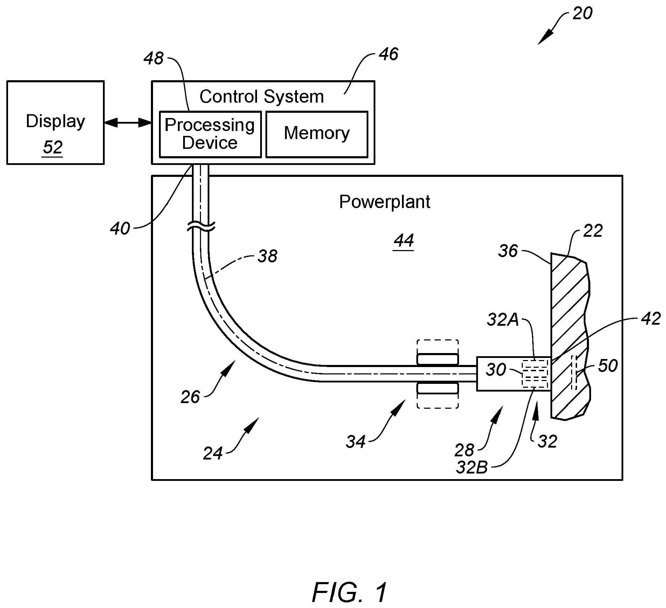

FIG. 1 illustrates an inspection system 20 for non-destructive inspecting a component 22 of a powerplant for an aircraft. The aircraft may be an airplane, a helicopter, a drone (e.g., an unmanned aerial vehicle (UAV)) or any other manned or unmanned aerial vehicle. The aircraft powerplant may be configured as, or otherwise included as part of, a propulsion system for the aircraft. The aircraft powerplant, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant may alternatively be configured as, or otherwise included as part of, a power generation system for the aircraft. The aircraft powerplant, for example, may be an auxiliary power unit (APU) or any other type of gas turbine engine configured to mechanically power operation of an electrical generator. The present disclosure, however, is not limited to such exemplary aircraft powerplants. Aspects of the present disclosure, for example, may also be used for inspecting components of other types of internal combustion engines and/or components of various other types of power units; e.g., an electric machine, a hybrid-electric power unit, etc.

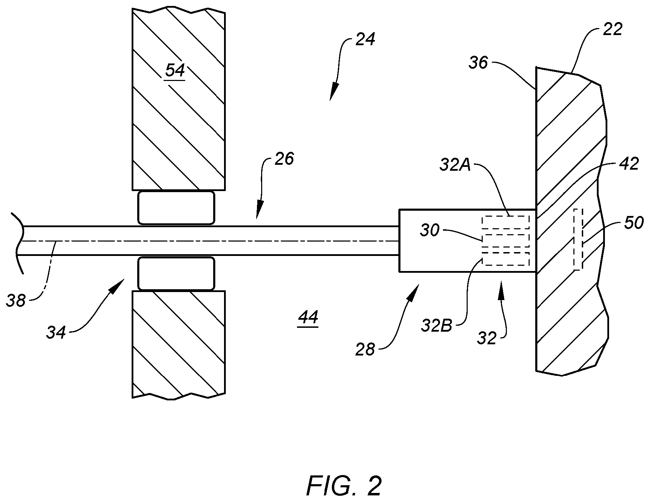

The inspection system 20 is configured to facilitate inspection of the powerplant component 22 while that powerplant component 22 remains installed within the aircraft powerplant and, for example, while the aircraft powerplant remains substantially or completely assembled. In FIG. 1, a powerplant component 22 is diagrammatically shown disposed within an interior 44 (e.g., an enclosed volume, an encased volume, etc. - see FIG. 2) of the aircraft powerplant. The inspection system 20 is also configured to facilitate inspection of the powerplant component 22 while the aircraft powerplant remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant when that aircraft powerplant is not installed with the aircraft (e.g., prior to installation with the aircraft or following removal from the aircraft) and/or when the aircraft powerplant is partially disassembled into one or more sub-assemblies.

The powerplant component 22 may be any inspectable (e.g., metal) component 22 within the aircraft powerplant. The present disclosure provides considerable utility, for example, in the inspection of rotor disks (e.g., a turbine rotor, a compressor rotor, or the like) within a gas turbine engine. To facilitate the description herein, the present disclosure will be described in terms of inspecting a component 22 in the form of a gas turbine engine rotor disk. To be clear, the present disclosure inspection system 20 is not limited to inspecting rotor disks.

Aspects of the present disclosure include an inspection system 20 that includes an electronic inspection scope 24 (e.g., a borescope) and a control system 46.

The inspection scope 24 may include a scope body 26 (e.g., a tether), a scope head 28, a scope positional sensor 30, and a transducer 32. In some embodiments, the inspection scope 24 may also include structure for positionally fixing at least a part of the inspection scope 24; e.g., an expandable mount 34. In FIG. 1, the expandable mount 34 is diagrammatically shown in a stowed arrangement by a solid line and in a deployed arrangement by the dashed line. In FIG. 2, the expandable mount 34 is diagrammatically shown engaged with a component structure 54 (e.g., a panel, wall, or the like) within the interior 44 of the aircraft powerplant. The expandable mount 34 may be configured to bias the scope head 28 against an exterior surface 36 of the component; e.g., rotor disk. The present disclosure does not require an expandable mount 34. In those embodiments that include an expandable mount 34, the present disclosure is not limited to any particular expandable mount 34 configuration.

The scope body 26 extends longitudinally along a longitudinal centerline 38 of the inspection scope 24 from a base end 40 of the inspection scope 24 to the scope head 28. The scope body 26 may be a flexible body. The scope body 26 may include one or more internal actuators for manipulating a configuration of the inspection scope 24 and its scope body 26 to aid in maneuvering the scope head 28 within the interior 44 of the aircraft powerplant to the powerplant component 22.

The scope head 28 embodiment shown in FIG. 1 may extend longitudinally along the centerline 38 at a scope distal end 42 of the inspection scope 24. The scope positional sensor 30 and the transducer 32 may be arranged with (e.g., mounted to and/or disposed in) the scope head 28.

The scope positional sensor 30 may be configured to aid in the maneuvering of the scope head 28 and, more particularly, maneuvering of the transducer 32 within the interior 44 of the aircraft powerplant towards the component 22 to be inspected; e.g., a rotor disk. The scope positional sensor 30, for example, may be configured as a camera, a proximity sensor, or the like, to provide information (e.g., in real time) regarding the location of the scope head 28 and/or the transducer 32 during the maneuvering of the scope head 28 within the interior 44 of the aircraft powerplant.

The transducer 32 is configured to function as both a signal transmitter and a signal receiver. In some embodiments, the transducer 32 includes at least one signal transmitter and at least one signal receiver, independent of one another. In some embodiments, the transducer 32 may be configured as a single device that functions as both a transmitter and a receiver. To facilitate the description herein, the transducer 32 will be described as having a signal transmitter that is independent of the signal receiver, but the present disclosure is not limited thereto. FIGS. 1 and 2 diagrammatically illustrate a signal transmitter 32A and a signal receiver 32B independent of one another.

The signal transmitter 32A is configured to emit an excitation signal into the component 22 to be inspected; e.g., a rotor disk. A non-limiting example of a signal transmitter 32A that may be used is piezoelectric ultrasonic actuator that produces an ultrasonic excitation signal that may be transmitted into the component 22; e.g., a rotor disk. The present disclosure is not limited to using a piezoelectric ultrasonic actuator, and in those embodiments that use a piezoelectric ultrasonic actuator, the present disclosure is not limited to any particular piezoelectric ultrasonic actuator configuration. Ultrasonic excitation signals may be in the range of 30-500kHz. In some embodiments, the excitation signals may be produced in particular frequency ranges; e.g., a five kilohertz (5 kHz) range, a ten kilohertz (10 kHz) range, a twenty kilohertz (20 kHz) range, or the like. The present disclosure is not limited to excitation signals in any particular frequency range. As will be detailed in further detail herein, the signal transmitter 32A is in communication with the control system 46 for controlling the operation of the signal transmitter 32A.

The signal receiver 32B is configured to sense a signal within the component (e.g., a rotor disk) that is produced in response to the emitted excitation signal and to produce a transducer response signal representative of the sensed signal. As will be detailed in further detail herein, the signal receiver 32B is in communication with the control system 46; e.g., response signals produced by the signal receiver 32B are provided to control system 46 for processing.

The control system 46 includes a controller 48 that is in communication with other system components such as the signal transmitter 32A and the signal receiver 32B; e.g., to control the operation of the respective system component and/or to receive signals from and/or transmit signals to that system component to perform the functions described herein. The controller 48 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the inspection system 20 to accomplish the same algorithmically and/or coordination of system components. The controller 48 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 48 may include, or may be in communication with, an input device (not shown) that enables a user to enter data and/or instructions, and may include, or be in communication with, an output device configured, for example to display information (e.g., a visual display 52 as shown in FIG. 1, or a printer, or the like), or to transfer data, etc. Communications between the controller 48 and other system components may be via a hardwire connection or via a wireless connection.

The control system 46 may include other components (e.g., signal processing hardware such as amplifiers, filters, analog to digital converters, or the like) in addition to or as an alternative to the components described herein.

Generally speaking, it is known to process transducer response signals to evaluate physical characteristics of a component 22 such as a rotor disk. Some existing approaches are limited to analyzing individual frequency peaks of transducer response signals to evaluate physical characteristics of a component 22. For example, individual signal peaks may be evaluated in terms of a univariate Gaussian distribution. When a signal peak differs significantly from an expected peak configuration (e.g., an outlier signal peak), the signal peak may be interpreted as being indicative of a defect or an undesirable anomaly (diagrammatically shown in FIGS. 1 and 2 as defect 50) present within the component 22. Component 22 inspection using this approach is useful but often limited. For example, component 22 to component 22 variations in acceptable components 22 can produce signal peak variations that may be difficult to distinguish from signal peak variations attributable to defects or undesirable anomalies present within the component 22. The present disclosure provides a methodology that is understood to provide information beyond individual signal peak analysis and thereby provide improved information relating to the presence or absence of a defect or an undesirable anomaly within a component 22.

In addition to utilizing signal peaks to provide improved information relating to the presence or absence of a defect or an undesirable anomaly within a component 22, embodiments of the present disclosure further evaluate transducer response signal frequency peaks collectively (as opposed to evaluating only an individual signal peak), as well as the phase and magnitude of the transducer response signals to provide improved information relating to the presence or absence of a defect or an undesirable anomaly within a component 22.

A component 22 free of defects or undesirable anomalies may be inspected using an inspection system (like the inspection system 20 described herein), having an electronic inspection scope 24 (with a signal transmitter 32A and a signal receiver 32B) and a control system 46, to develop a signal response pattern (provided by response signals produced by the signal receiver 32B) that is associated with a component 22 free of defects or undesirable anomalies. A component 22 free of defects or undesirable anomalies may be referred to as a control component. In view of variability that may exist (e.g., between components 22, or sensor response, testing conditions, and the like, or any combination thereof), a database of acceptable signal response patterns may be developed (e.g., by inspecting a statistically useful number of the control components that are the same type as the component 22 being inspected) that may subsequently be used during inspection of components 22 to determine the presence or absence of a defect or undesirable anomaly. The database of acceptable signal response patterns may be stored in a memory device in a variety of different formats. For example, the database of acceptable signal response patterns may include the signals themselves, or signal data characterized in the form of threshold values, or characterized in algorithmic form, or the like, or any combination thereof. To facilitate the description herein, the stored database of acceptable signal response patterns (regardless of its format) may be referred to as "stored acceptable signal response data".

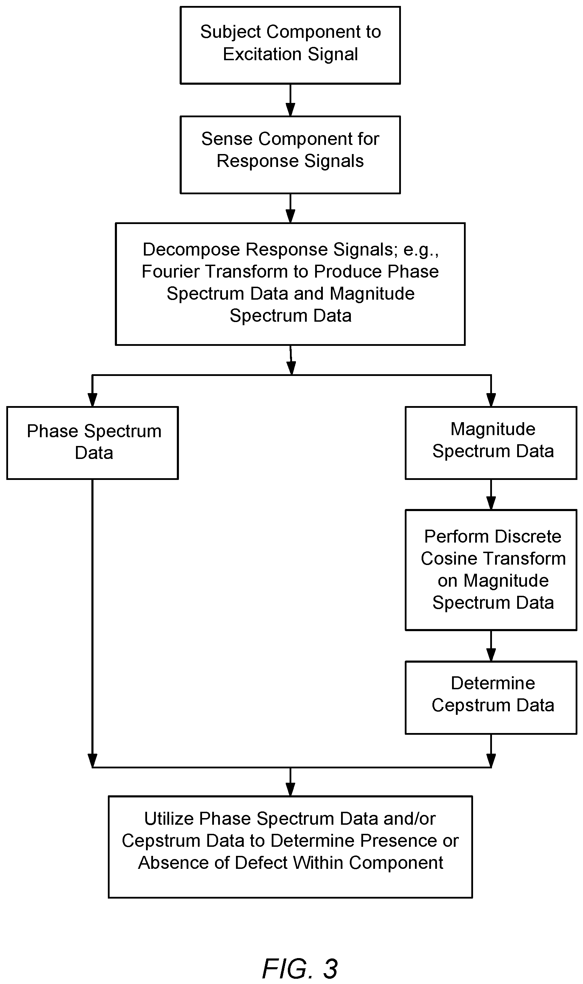

Referring to FIG. 3, in some embodiments of the present disclosure, the transducer response signals may be decomposed to produce phase and magnitude data (e.g., phase spectrum and magnitude spectrum), and the phase and magnitude data may be used in the inspection of the component 22; e.g., a rotor disk. For example, a Fourier transform may be used to produce signal phase data (e.g., phase spectrum) and signal magnitude data (e.g., magnitude spectrum). The signal magnitude data is representative of the strength of each frequency within the transducer response signals and the phase data describes the sine/cosine phase of each frequency within the transducer response signals. The signal magnitude data (e.g., magnitude spectrum) may be further processed to produce cepstrum values (e.g., cepstral coefficients), for example by using a discrete cosine transform of the magnitude spectrum. Each cepstral coefficient is representative of a relationship across transducer response signal frequencies at a different frequency, which can be used to identify harmonic components within the transducer response signals. The harmonic components, in turn, may be used to the presence or absence of defects or undesirable anomalies within the component 22 being sensed. The above cepstral analysis is understood to facilitate differentiating defects / undesirable anomalies from component 22 to component 22 variability. The database containing stored acceptable signal response data may include phase and magnitude data produced using the cepstral analysis process described above based on transducer response signals produced during inspection of components 22 free of defects or undesirable anomalies.

The present disclosure at least in part stems from the discovery that certain defects that may be present within a rotor disk have one or more effects on a significant number of frequencies within the response signal spectrum in a consistent way. One of these effects is that a significant number of frequency peaks within the response signal spectrum consistently shift downward some amount when a defect is present within the rotor disk. The extent to which the frequency peaks shift downward may be a function of the nature of the defect, but the frequency peak shift across the significant number of frequency peaks is consistent. The present disclosure includes the further discovery that a cepstral analysis may be used to capture the overall frequency peak shift across the frequencies within the response signal spectrum. The cepstral analysis utilizes a linear transformation of the response signal frequency spectrum to produce a cepstrum having dimensions across substantially all (or all) of the frequency spectrum. The present disclosure includes the discovery that after the transformation, dimensions in the cepstrum can be identified useful in distinguishing a defect free rotor disk from a rotor disk having a defect. The present disclosure cepstral analysis application importantly differs from a conventional application of a cepstral analysis like that used in a speech application; e.g., where the cepstral analysis is used as a decorrelating transform and to separate source information from filter information. In contrast, the present disclosure uses a cepstral analysis to identify dimensions within the cepstrum that are indicative of defects. In some embodiments, the information obtained from cepstral analysis may be combined with phase information from the response signals to facilitate the identification of a defect within a rotor disk.

Component to component variability in frequency response is known to be an order of magnitude higher than the frequency variability induced by a defect present in a rotor disk. The present disclosure methodology utilizes response signal features (e.g., frequency peak shift across the frequencies within a response signal spectrum) to differentiate defects from component to component variability. The frequency changes due to a defect are both localized and expressed through harmonics. Frequency changes due to component to component variability are more independent and pervasive throughout the frequency range.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A method of inspecting a component (22), comprising
using a transducer (32) to transmit a first signal into a component (22) comprising a solid metallic material;
using the transducer (32) to sense the component (22) for a second signal produced as a result of the first signal being transmitted into the component (22), and produce a response signal representative of the second signal;
processing the response signal received from the transducer (32), the processing including decomposing the response signal into a phase spectrum and a magnitude spectrum; and
using the phase spectrum and the magnitude spectrum to determine a presence or an absence of a defect in the solid metallic material of the component (22).

2. The method of claim 1, wherein the step of decomposing the response signal into the phase spectrum and the magnitude spectrum includes applying a Fourier transform to the response signal.

3. The method of claim 2, further comprising determining a cepstrum value, and using the cepstrum value to determine the presence or absence of the defect in the solid metallic material of the component (22).

4. The method of claim 3, wherein the step of determining the cepstrum value includes applying a discrete cosine transform to the magnitude spectrum.

5. The method of claim 3 or 4, wherein the response signal includes a range of different frequencies.

6. The method of claim 5, wherein the cepstrum value is a cepstral coefficient that is representative of a relationship of a given frequency across the range of different frequencies within the response signal.

7. The method of any preceding claim, further comprising using a database of stored acceptable signal response data determined from a plurality of control components that are free from defects to determine the presence or absence of the defect in the solid metallic material of the component (22).

8. The method of any preceding claim, wherein the transducer (32) includes a signal transmitter (32A) and a signal receiver (32B), and the signal transmitter (32A) is independent of the signal receiver (32B).

9. The method of any preceding claim, wherein the first signal and the second signal are in the range of 30-500kHz.

10. An investigation system (20) for a component (22) comprising a solid metallic material, the system (20) comprising:
a signal transmitter (32A);
a signal receiver (32B); and
a controller (48) in communication with the signal transmitter (32A), the signal receiver (32B), and a non-transitory memory storing instructions, which instructions when executed cause the controller to:
control the signal transmitter to transmit a first ultrasonic signal into the component (22) comprising the solid metallic material;
control the signal receiver (32B) to sense the component (22) for a second ultrasonic signal produced by transmitting the first ultrasonic signal, and produce a response signal representative of the second ultrasonic signal;
process the response signal received from the signal receiver (32B), the processing including decomposing the response signal into a phase spectrum and a magnitude spectrum; and
use the phase spectrum and the magnitude spectrum to determine a presence or an absence of a defect in the solid metallic material of the component (22).

11. The system of claim 10, wherein the instructions when executed cause the controller (48) to decompose the response signal into the phase spectrum and the magnitude spectrum by applying a Fourier transform to the response signal.

12. The system of claim 11, wherein the instructions when executed cause the controller (48) to determine a cepstrum value, and to use the cepstrum value in the determination of the presence or the absence of the defect in the solid metallic material of the component (22).

13. The system of claim 12, wherein the instructions when executed cause the controller (48) to apply a discrete cosine transform to the magnitude spectrum in the determination of the cepstrum value.

14. The system of claim 12 or 13, wherein the response signal includes a range of different frequencies.

15. The system of claim 14, wherein the cepstrum value is a cepstral coefficient that is representative of a relationship of a given frequency across the range of different frequencies within the response signal.
